# EUROPÄISCHE PATENTSCHRIFT

(11) **EP 2 082 903 B1**
(45) Veröffentlichungstag und Bekanntmachung des Hinweises auf die Patenterteilung: **11.05.2011**
(21) Anmeldenummer: 09000685.9
(22) Anmeldetag: 20.01.2009
(51) Int. Cl.: B60G 11/00, F16F 1/02, F16F 1/366

(54) **Fahrzeugfeder aus Faserverbundwerkstoff**
Vehicle spring made from composite material
Ressort de véhicule en matière active à fibres composites

(30) Priorität: 28.01.2008 DE 102008006411
(43) Veröffentlichungstag der Anmeldung: 29.07.2009
(73) Patentinhaber: Muhr und Bender KG, 57439 Attendorn (DE)
(72) Erfinder: Kobelev, Vladimir, Dr. rer. nat., 57439 Attendorn (DE); Westerhoff, Karsten, Dipl.-Ing., 58540 Meinerzhagen (DE); Neubrand, Jörg, Dr.-Ing., 57258 Freudenberg (DE); Brandt, Robert, Dr. rer. nat., 57439 Attendorn (DE); Brecht, Jörg Dieter, Dr.-Ing., 57462 Olpe (DE)
(74) Vertreter: Neumann, Ernst Dieter

(56) Entgegenhaltungen:
- EP-A- 0 132 048
- EP-A- 0 245 099
- WO-A-86/04124
- WO-A-87/00252
- DE-A1- 3 641 108
- DE-A1- 19 962 026
- GB-A- 2 197 424
- US-A- 2 063 216
- US-A1- 2007 267 792

## Beschreibung

Die Erfindung betrifft eine Bandfeder aus Faserverbundmaterial mit wellenförmigen Verlauf, wobei ein Federband als einzelner Wellenzug aus Umkehrbereichen und Zwischenabschnitten um eine Längsmittellinie L mäandert, die im wesentlichen der Richtung der Krafteinleitung K entspricht.

Erzeugnisse aus Faserverbundwerkstoff werden aus Matten aus harzgetränkten Geweben oder Gelegen (Prepregs) mit bestimmter Zuschnittform oder aus harzgetränkten Faserbündeln, die parallelfaserig oder ineinander verdreht sein können (Rowings), hergestellt, die in Formen eingelegt und dort unter Druckaufgabe auf eine erhöhte Temperatur gebracht werden, bei das die Matrix bildende Harz irreversibel erhärtet. Das Fasermaterial in der Matrix führt dabei zu einer erhöhten Festigkeit des Fertigerzeugnisses.

Die genannten Matten können mehrschichtig übereinandergelegt werden, wobei auch unterschiedliche Mattenqualitäten verwendet werden können. Die genannten Faserstränge können miteinander verwoben oder verschränkt werden, so daß gewebeähnliche Strukturen entstehen. Die Fasern können als Glasfasern, als Kohlenstofffasern, als Aramidfasern (Kevlar) oder auch als Metallfasern sortenrein oder miteinander vermischt zum Einsatz kommen. Die verwendeten Harze erhärten in der Regel bei Temperaturen von 150 bis 180 °C irreversibel und geben dem Fertigerzeugnis ihre bleibende Form.

Eine Bandfeder der erstgenannten Art ist aus der US 4 927 124 A und aus der US 5 013 013 A bekannt. Die Bandfeder hat hierbei jeweils über der ganzen Länge des Federbandes im wesentlichen gleichbleibende Breite und gleichbleibende Dicke. Es ist hier auch beschrieben, daß zwei Bandfedern dieser Art in symmetrischer Anordnung in einem Federbein für ein Kraftfahrzeug verwendet werden können.

Aus der DE 199 62 026 A1 sind Bandfedern bekannt, die paarweise miteinander verbunden werden, wobei die Wellenzüge der beiden Federbänder mit Abstand parallel zueinander liegen und nur die jeweiligen Endbereiche miteinander zur Verbindung kommen. Auch hier ist die Verwendung in einem Federbein eines Kraftfahrzeuges vorgesehen.

Aus der US 2007/0267792 A1 sind schließlich Bandfedern konstanter Breite bekannt, bei denen jeweils erste Umkehrbereiche gegenüber zweiten Umkehrbereichen und den verbindenden Zwischenabschnitten in der Dicke erhöht sind. Ein Einfedern erfolgt hierbei zunächst durch Verformen der jeweils zweiten aus dünnerem Material bestehenden Umkehrbereiche, die dadurch in nachteiliger Weise hoch beansprucht werden. Es ist die Verwendung zweier Bandfedern dieser Art mit einer Dämpfereinheit in einem Kraftfahrzeug vorgesehen.

Aus der EP 0 132 048 A1 ist in einer ersten Ausführungsform eine Federanordnung mit zwei Federelementen aus faserverstärktem Kunststoff bekannt, von denen jedes Federelement vier Schenkel umfasst, die über Reflexabschnitte miteinander verbunden sind. Es sind Blöcke aus elastomerem Material an jedem Reflexabschnitt vorgesehen, die separat vom Federelement hergestellt und nachträglich an dieses anvulkanisiert werden. Gemäß einer zweiten Ausführungsform ist ein Federelement mit eingelegten Zwischenlagen gezeigt, die sich über die gesamte Länge des Federelements erstrecken.

Aus der US 2 063 216 ist eine Vorrichtung aus geformtem Metall bekannt, die aus Segmenten und Verbindungsstücken besteht. Die Segmente haben weggeschnittene Seiten.

Aus der US 2007/0267792 A1 ist eine Sigma-Feder aus glasfaserverstärktem Kunststoff bekannt. Die Sigma-Feder ist in den äußeren Umkehrbereichen verdickt und in den inneren Umkehrbereichen dünner gestaltet. Über der Länge hat die Sigma-Feder eine gleichbleibende Dicke.

Aus der DE 36 41 108 A1 ist ein Federelement aus Flachstahl bekannt, dass aus mehreren nacheinander folgenden Winkel- oder U-förmigen Kantungen und Federschenkeln zusammengesetzt ist.

Aus der EP 0 245 099 A1 ist eine Feder in Form eines Zick-Zack-Streifens aus faserverstärktem Kunststoff bekannt.

Der vorliegenden Erfindung liegt die Aufgabe zugrunde, Bandfedern bereitzustellen, die günstige Belastungsverhältnisse im Einsatz aufweisen und damit eine erhöhte Lebensdauer versprechen. Dabei soll die Verwendung in Federbeinen neuer kompakter Bauweise möglich sein.

Die Lösung besteht in einer Bandfeder aus Faserverbundmaterial mit wellenförmigen Verlauf, wobei ein Federband als einzelner Wellenzug aus Umkehrbereichen und Zwischenabschnitten um eine Längsmittellinie L mäandert, die im wesentlichen der Richtung der Krafteinleitung K entspricht, wobei in den Umkehrbereichen des Wellenzuges jeweils ein erhöhtes Widerstandsmoment des Federbandes vorgesehen ist, wobei die effektive Querschnittsfläche des Federbandes über der Länge im wesentlichen konstant ist, wobei die Dicke (H) des Feelerbandes in den Umkehrbereichen (12, 13) gegenüber der Dicke der verbindenden zwischmabschnitte (14, 15) enheit ist. und wobei die Variation der Breite über der Länge des Federbandes stetig erfolgt. Das Widerstandsmoment W berechnet sich aus Breite B und Dicke H des Federbandes gemäß der Formel W= (B·H²):12. Das erfindungsgemäße erhöhte Widerstandsmoment in den Umkehrbereichen führt bei Belastung der Feder zu reduzierten Spannungen in diesen Umkehrbereichen, so daß ein Delaminieren in diesen kritischen Bereichen als Folge von Schubbeanspruchungen im Material vermieden werden kann. Unter Delaminieren wird ein zumindest örtliches Lösen des Verbundes zwischen Fasermaterial und Matrix verstanden. Insbesondere sollen Spannungsspitzen auf der Außenseite der Umkehrbereiche vermieden werden. In der belasteten Feder herrschen weitgehend gleichmäßige Spannungszustände, so daß eine optimale Materialausnutzung gegeben ist und damit das geringstmögliche Gewicht darstellbar ist. Die Bauform der Feder ist sehr kompakt.

Zur Erhöhung des Widerstandsmomentes in den Umkehrbereichen der einwelligen Feder ist es möglich, in diesen Bereichen die Dicke H des Federbandes zu erhöhen, wobei die Breite B in diesen Bereichen gegebenenfalls konstant bleiben kann oder sogar reduziert werden kann.

Gemäß der Erfindung ist vorgesehen, daß der Querschnitt des Federbandes bzw. der Federbänder über der gesamten Länge im wesentlichen konstant bleibt. Die Erhöhung des Widerstandmomentes in den Umkehrbereichen erfolgt in diesem Fall durch eine Vergrößerung der Dicke H, die in die Berechnung des Widerstandsmomentes mit einer höheren Potenz eingeht als die Breite B.

Durch Verwendung spezieller Fasermaterialien in den Umkehrbereichen, und/oder durch zusätzliche Lagen von Prepregs oder zusätzliche Umwicklungen von Rowings quer zum Längsverlauf des Federbandes kann das Widerstandsmoment in den Umkehrbereichen erhöht werden, ggfs. auch bei im wesentlichen gleichbleibenden Querschnittsflächen.

Sowohl die Variation der Breite des Federbandes als auch die Variation der Dicke des Federbandes soll im wesentlichen stetig oder feingestuft erfolgen. Während die Variation der Breite im wesentlichen durch die Gestalt des Zuschnitts der verwendeten Prepregs erfolgt, kann die Variation der Dicke durch abschnittsweise vorgesehene erhöhte Mehrlagigkeit der Prepregs erzeugt werden.

Eine besonders günstige Materialausnutzung und eine Kostenoptimierung ist dadurch möglich, daß die Bandfeder mehrlagig ausgeführt ist, wobei eine mittlere Schicht aus Prepregs geringerer Qualität, beispielsweise aus glasfaserverstärktem harzgetränktem Material hergestellt wird, während Außenschichten aus höherwertigen Prepregs, beispielsweise aus kohlefaserverstärktem oder aramidfaserverstärktem harzgetränkten Material hergestellt werden.

Zum Fertigstellen werden die aus Prepregs und/oder Rowings gebildeten Zwischenerzeugnisse in heizbare Formen eingelegt und unter Druck irreversibel ausgehärtet. Zur Verwendung in Federbeinen haben die Bandfedern in Richtung der Längsmittelachse fluchtende Durchgangslöcher, durch die eine Dämpferanordnung durchgesteckt werden kann. Diese Durchgangslöcher werden vorzugsweise schon bei der Herstellung der Bandfedern offengehalten durch entsprechenden Zuschnitt der Prepregs und/ oder durch entsprechende Legung der Rowings. Sie können jedoch auch nach der Herstellung gebohrt werden.

Die Bandfedern enden bevorzugt an beiden Enden jeweils in einem Umkehrbereich. Hiermit bildet der letzte Zwischenabschnitt eine großflächige Stützfläche zur Auflage auf einem formangepaßten Federteller.

Bevorzugte Ausführungsbeispiele der Erfindung sind in den Zeichnungen dargestellt und werden nachfolgend beschrieben.
- Figur 1: zeigt eine Bandfeder der einwelligen Art in 3-D-Ansicht;
- Figur 2: zeigt eine erfindungsgemäße Bandfeder in einer ersten Ausführungsform in einer 3-D Ansicht;
- Figur 3: zeigt eine Bandfeder in einer weiteren Ausführungsform in einer 3-D Ansicht;
- Figur 4: zeigt eine erfindungsgemäße Bandfeder in einer zweiten Ausführungsform in einer 3-D Ansicht;
- Figur 5: zeigt eine Bandfeder in einer weiteren Ausführungsform in einer 3-D Ansicht;
- Figur 6: zeigt eine erfindungsgemäße Bandfeder in einer weiteren Ausführungsform in einer 3-D Ansicht;
- Figur 7: zeigt die Bandfeder nach Figur 6 in Ergänzung zu einem Federbein;
- Figur 8: zeigt eine erfindungsgemäße Bandfeder in einer dritten Ausführungsform in einer 3-D Ansicht;
- Figur 9: zeigt die erfindungsgemäße Bandfeder nach Figur 8 in Ergänzung zu einem Federbein;
- Figur 10: zeigt eine erfindungsgemäße Bandfeder in einer vierten Ausführungsform in 3-D Ansicht;
- Figur 11: zeigt die erfindungsgemäße Bandfeder nach Figur 10 in Ergänzung zu einem Federbein in Explosionsdarstellung:
- Figur 12: zeigt ein Federbein gemäß Figur 11 in fertigmontierter Stellung;
- Figur 13: zeigt eine Bandfeder der doppelwelligen Art in 3-D-An-sicht;
- Figur 14: zeigt ein Federbein mit einer Bandfeder nach Figur 7;
- Figur 15: zeigt eine Prinzipdarstellung eine Bandfeder mit gerader Längsmittellinie L
a) in entspanntem Zustand;
b) in Einspannung zwischen parallelen Federauflagen;
- Figur 16: zeigt eine Prinzipdarstellung eine Bandfeder mit C-förmig gekrümmter Längsmittellinie L
a) in entspanntem Zustand;
b) in Einspannung zwischen parallelen Federauflagen;
- Figur 17: zeigt eine Prinzipdarstellung eine Bandfeder mit S-förmig gekrümmter Längsmittellinie L
a) in entspanntem Zustand;
b) in Einspannung zwischen parallelen Federauflagen;
- Figur 18: zeigt eine Prinzipdarstellung eine Bandfeder mit durch Überlagerung einer C-Form und einer S-Form entstandener gekrümmter Längsmittellinie L

a) in entspanntem Zustand
b) in Einspannung zwischen parallelen Federauflagen.

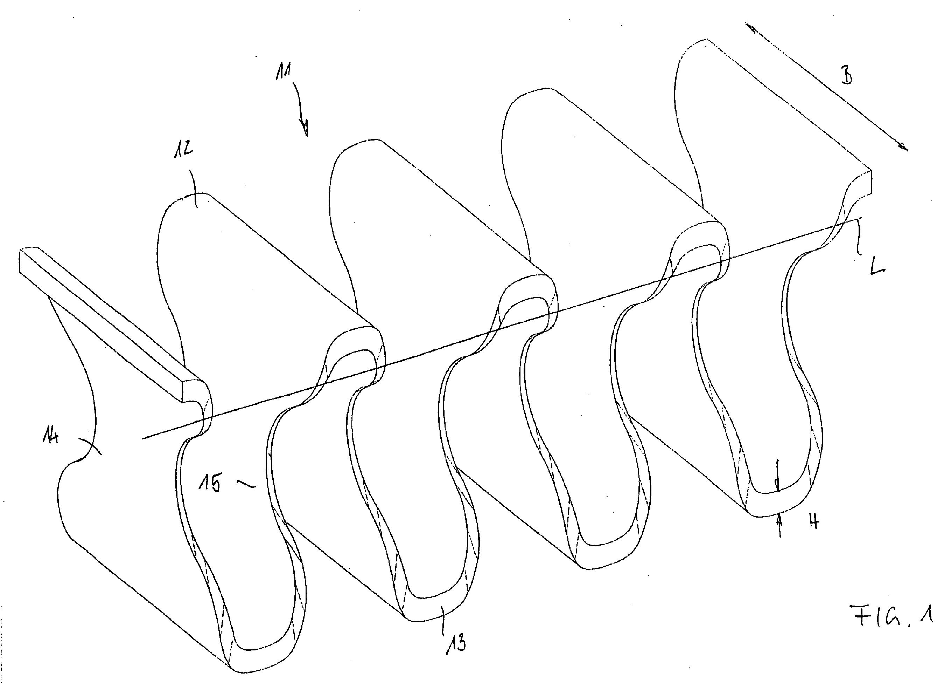

Figur 1 zeigt eine Bandfeder 11 in einer Ausführungsform, die ein Federband mit wellenförmigen Verlauf umfaßt, das insgesamt um eine Längsmittellinie L mäandert und vier vollständige Welleneinheiten hat. Hierbei sind drei vollständige und zwei jeweils halb abgeschnittene erste Umkehrbereiche 12 sowie vier vollständige zweite Umkehrbereiche 13 erkennbar, wobei die hälftigen Umkehrbereiche die Enden der Bandfeder 11 definieren. Die stärker gekrümmten Umkehrbereiche 12, 13 sind durch Zwischenabschnitte 14, 15 mit geringerer Krümmung verbunden. Im vorliegenden Ausführungsbeispiel ist die Materialdicke des Federbandes variabel, wobei die Dicke H und die quer zur Wellenlinie verlaufende Breite B der Bandfeder in den Umkehrbereichen 12, 13 wesentlich höher ist als in den Verbindungsbereichen 14, 15. Die Breitenänderungen sind hierbei weitestgehend stetig und können durch einen Sinusverlauf der Kantenlinien (bei Abwicklung des Federbandes oin eine Ebene) dargestellt werden. Bei Zug-Druck-Krafteinleitung in die jeweils äußeren Zwischenabschnitte 14, 15 bzw. die hälftig abgeschnittenen Umkehrbereiche 12 am Ende der Bandfeder kommt es zu einer Verkürzung und Längung der Bandfeder. Die Biegewiderstandsmomente der Umkehrbereiche 12, 13 sind aufgrund der erhöhten Dicke und Breite wesentlich höher als die der Zwischenabschnitte 14, 15. Hiermit werden möglichst gleichmäßige Spannungszustände im Material der Bandfeder über ihrer gesamten Länge erreicht.

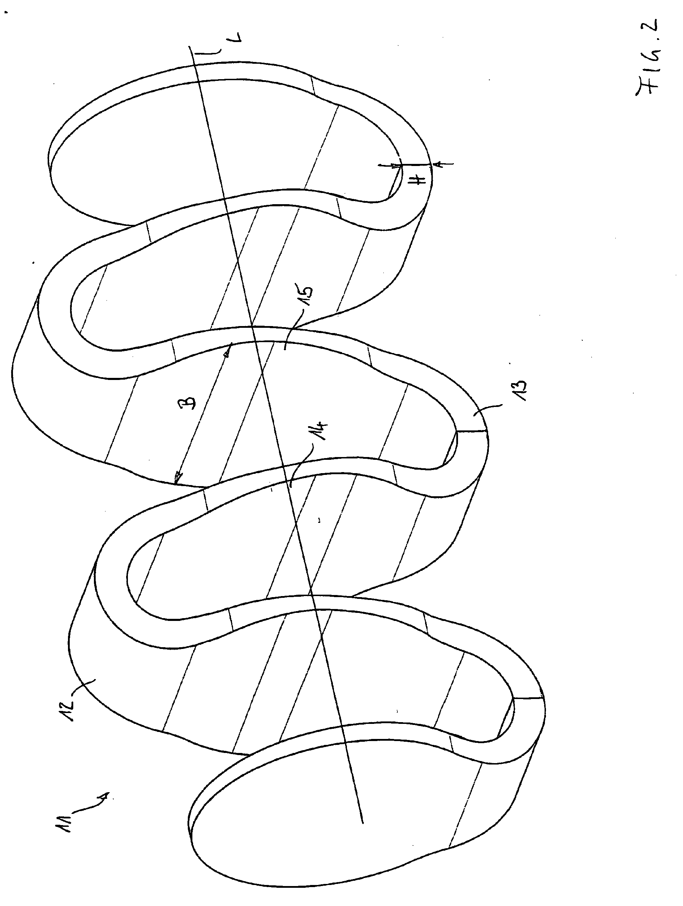

Figur 2 zeigt eine erfindungsgemäße Bandfeder 11 in einer ersten Ausführungsform, die ein Federband mit wellenförmigen Verlauf umfaßt, das insgesamt um eine Längsmittellinie L mäandert und zwei vollständige Welleneinheiten hat. Hierbei sind zwei vollständige erste Umkehrbereiche 12 sowie drei vollständige zweite Umkehrbereiche 13 erkennbar, wobei die Enden der Bandfeder 11 keine Umkehrbereiche mehr ausbilden. Die stärker gekrümmten Umkehrbereiche 12, 13 sind durch Zwischenabschnitte 14, 15 mit geringerer Krümmung verbunden. Im vorliegenden Ausführungsbeispiel ist die Materialdicke des Federbandes variabel, wobei die Dicke H in den Umkehrbereichen 12, 13 größer ist, während die quer zur Wellenlinie verlaufende Breite B der Bandfeder in den Umkehrbereichen 12, 13 geringer ist als in den Verbindungsbereichen 14, 15. Die Breitenänderungen sind hierbei weitestgehend stetig und können durch einen Sinusverlauf der Kantenlinien (bei Abwicklung des Federbandes oin eine Ebene) dargestellt werden. Bei Zug-Druck-Krafteinleitung in die jeweils äußeren Zwischenabschnitte 14, 15 am Ende der Bandfeder kommt es zu einer Verkürzung und Längung der Bandfeder. Die Biegewiderstandsmomente der Umkehrbereiche 12, 13 sind aufgrund der erhöhten Dicke wesentlich höher als die der Zwischenabschnitte 14, 15. Hiermit werden möglichst gleichmäßige Spannungszustände im Material der Bandfeder über ihrer gesamten Länge erreicht.

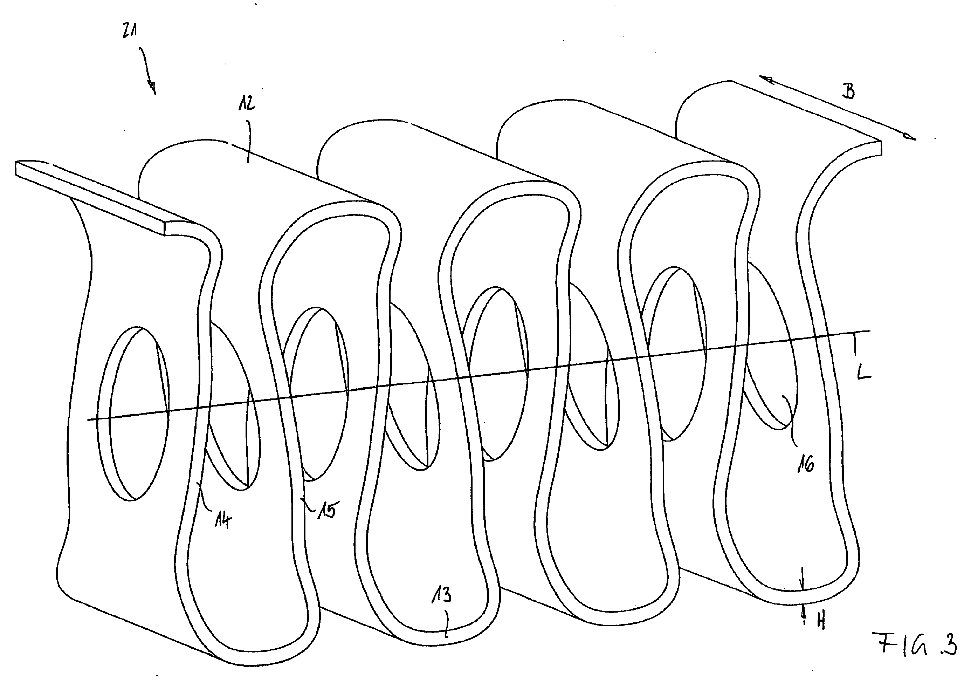

Die Figur 3 zeigt eine Bandfeder 21 in einer weiteren Ausführungsform. Gleiche Einzelheiten sind mit gleichen Bezugsziffern wie bei der Bandfeder nach Figur 1 bezeichnet. Auf die vorangehende Beschreibung wird insoweit weitgehend Bezug genommen. Auch die hier gezeigte Bandfeder 21 hat ein Federband, das um eine Längsmittelachse L mäandert und insgesamt vier vollständige Welleneinheiten aufweist. Hier ist bei konstanter Dicke H des Federbandes eine variable Breite B des Federbandes zu erkennen, wobei die Umkehrbereiche 12, 13 die größere Breite gegenüber den Zwischenabschnitten 14, 15 abweisen. Abweichend von der Ausführung nach Figur 1 sind hierbei in den Zwischenabschnitten 14, 15 jeweils Löcher 16 vorgesehen, deren nicht besonders markierte Mittelpunkte auf der Längsmittellinie L liegen und die übereinstimmende Größe haben, so daß in Richtung der Längsmittellinie L betrachtet die Löcher 16 miteinander fluchten. Die Löcher 16 können kreisrund oder ellipsenförmig sein.

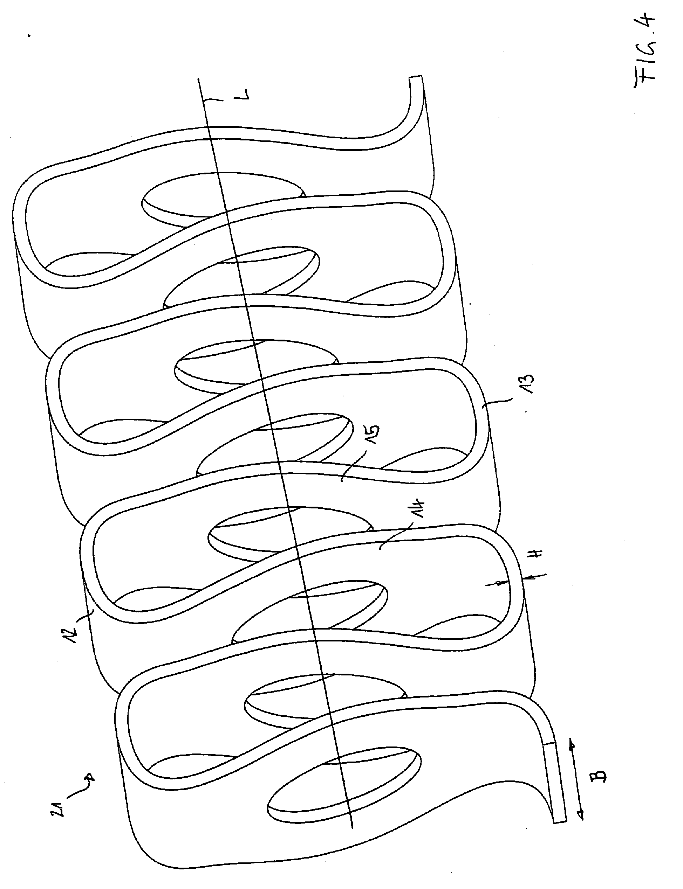

Die Figur 4 zeigt eine erfindungsgemäße Bandfeder 21 in einer zweiten Ausführungsform. Gleiche Einzelheiten sind mit gleichen Bezugsziffern wie bei der Bandfeder nach Figur 1 bezeichnet. Auf die vorangehende Beschreibung wird insoweit weitgehend Bezug genommen. Auch die hier gezeigte Bandfeder 21 hat ein Federband, das um eine Längsmittelachse L mäandert und insgesamt vier vollständige Welleneinheiten aufweist. Ebenso ist hier bei konstanter Dicke H des Federbandes eine variable Breite B des Federbandes zu erkennen, wobei die Umkehrbereiche 12, 13 eine geringere Breite gegenüber den Zwischenabschnitten 14, 15 abweisen. Da auch hierbei in den Zwischenabschnitten 14, 15 jeweils Löcher 16 vorgesehen, sind, ist die wirksame Querschnittsfläche des Federbandes jedoch in den Umkehrbereichen 12, 13 größer ist, als in den Zwischenabschnitten. In Richtung der Längsmittellinie L betrachtet fluchten die Löcher 16 miteinander. Die Löcher 16 können kreisrund oder ellipsenförmig sein.

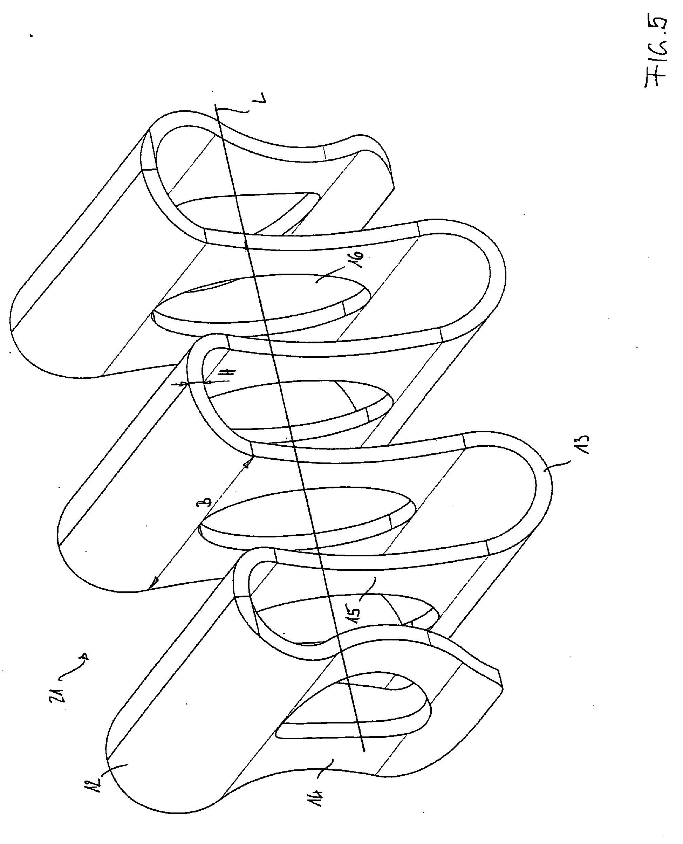

Die Figur 5 zeigt eine Bandfeder 21 in einer weiteren Ausführungsform. Gleiche Einzelheiten sind mit gleichen Bezugsziffern wie bei der Bandfeder nach Figur 1 bezeichnet. Auf die vorangehende Beschreibung wird insoweit weitgehend Bezug genommen. Auch die hier gezeigte Bandfeder 21 hat ein Federband, das um eine Längsmittelachse L mäandert und insgesamt zwei vollständige Welleneinheiten aufweist. Ebenso ist hier bei konstanter Dicke H des Federbandes eine variable Breite B des Federbandes zu erkennen, wobei die Umkehrbereiche 12, 13 die größere Breite gegenüber den Zwischenabschnitten 14, 15 abweisen. Abweichend von der Ausführung nach Figur 1 sind hierbei in den Zwischenabschnitten 14, 15 jeweils Löcher 16 vorgesehen, deren nicht besonders markierte Mittelpunkte auf der Längsmittellinie L liegen und die übereinstimmende Größe haben, so daß in Richtung der Längsmittellinie L betrachtet die Löcher 16 miteinander fluchten. Die Löcher 16 können kreisrund oder ellipsenförmig sein.

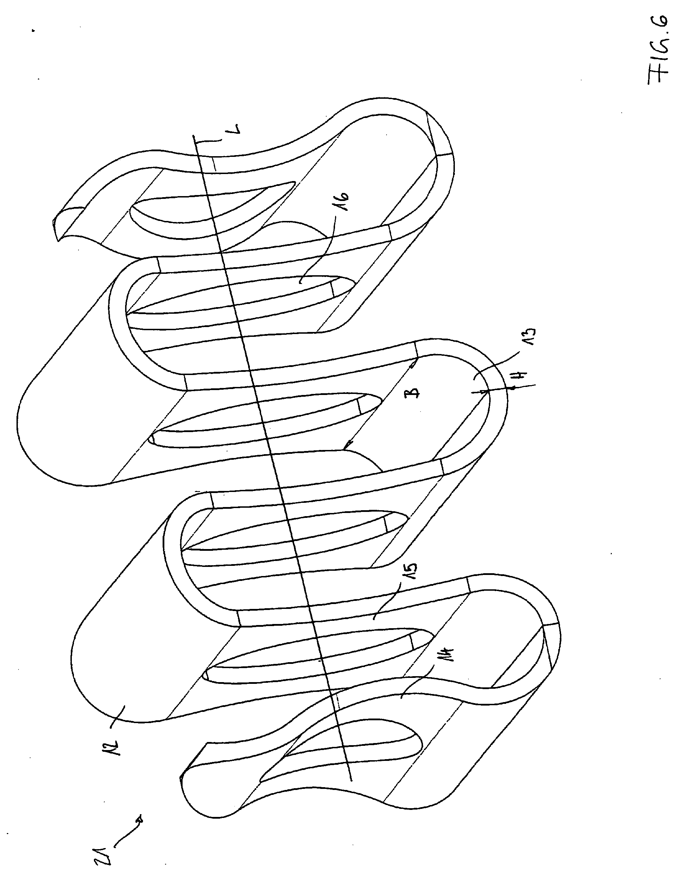

Die Figur 6 zeigt eine Bandfeder 21 in einer weiteren Ausführungsform. Gleiche Einzelheiten sind mit gleichen Bezugsziffern wie bei der Bandfeder nach Figur 1 bezeichnet. Auf die vorangehende Beschreibung wird insoweit weitgehend Bezug genommen. Auch die hier gezeigte Bandfeder 21 hat ein Federband, das um eine Längsmittelachse L mäandert und insgesamt zwei vollständige Welleneinheiten aufweist. Ebenso ist hier bei konstanter Dicke H des Federbandes eine variable Breite B des Federbandes zu erkennen, wobei die Umkehrbereiche 12, 13 die größere Breite gegenüber den Zwischenabschnitten 14, 15 abweisen. Abweichend von der Ausführung nach Figur 1 sind hierbei in den Zwischenabschnitten 14, 15 jeweils Löcher 16 vorgesehen, deren nicht besonders markierte Mittelpunkte auf der Längsmittellinie L liegen und die übereinstimmende Größe haben, so daß in Richtung der Längsmittellinie L betrachtet die Löcher 16 miteinander fluchten. Die Löcher 16 können kreisrund oder ellipsenförmig sein.

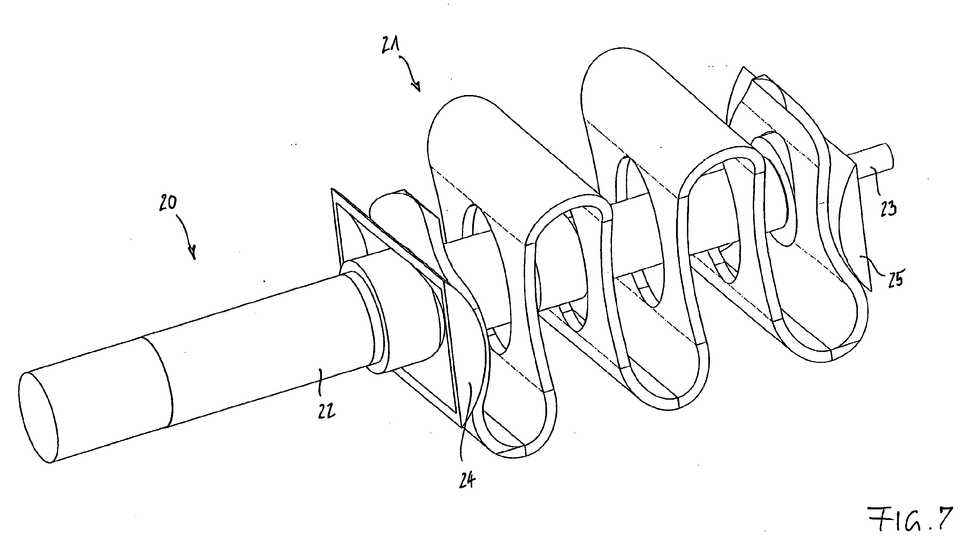

In Figur 7 ist eine Bandfeder 21 nach Figur 6 mit einer Dämpfereinheit 20 zu einem Federbein montiert. Hierbei ist ein äußeres Dämpferrohr 22 mit einem ersten Federteller 24 und ein inneres Dämpferrohr 23 mit einem zweiten Federteller 25 jeweils fest verbunden. Die Dämpfereinheit 20 ist durch die Löcher 16 der Zwischenabschnitte 14, 15 hindurchgesteckt, die oberen und unteren Federteller 24, 25 sind schalenförmige Blechkonstruktionen, die sich flächig an die endständigen Zwischenabschnitte 14, 15 des Wellenzuges der Bandfeder 21 anlegen, wobei diese abgestützten Zwischenabschnitte selber nicht auf Biegung belastet werden. Insoweit ist die Breiten- oder Dickenvariation des Federbandes in diesen Abstützbereichen von geringerer Bedeutung. Allerdings sind die jeweils letzten vollständigen Umkehrbereiche 12, 13 die sich von den Federtellern 24, 25 abheben, bereits erfindungsgemäß mit erhöhtem Biegewiderstandsmoment auszuführen. Die Dämpfereinheit 20 dient erkennbar auch der Führung des Federbandes, d.h. ein seitliches Ausknicken in der Mittelebene des Wellenzuges oder senkrechte Mittelebene des Wellenzuges wird durch die Führung der Löcher 16 auf der Dämpfereinheit 20 verhindert.

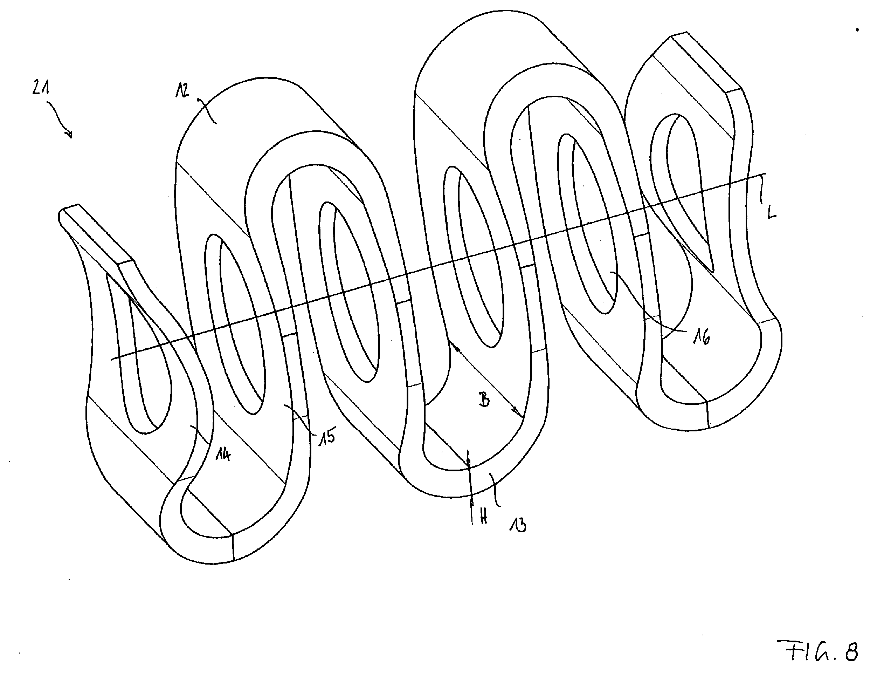

Die Figur 8 zeigt eine erfindungsgemäße Bandfeder 21 in einer dritten Ausführungsform. Gleiche Einzelheiten sind mit gleichen Bezugsziffern wie bei der Bandfeder nach Figur 1 bezeichnet. Auf die vorangehende Beschreibung wird insoweit weitgehend Bezug genommen. Auch die hier gezeigte Bandfeder 21 hat ein Federband, das um eine Längsmittelachse L mäandert und insgesamt zwei vollständige Welleneinheiten aufweist. Hier ist bei variabler Dicke H des Federbandes zugleich eine variable Breite B des Federbandes zu erkennen, wobei die Umkehrbereiche 12, 13 die größere Dicke H jedoch geringere Breite B gegenüber den Zwischenabschnitten 14, 15 abweisen. Abweichend von der Ausführung nach Figur 1 sind hierbei in den Zwischenabschnitten 14, 15 jeweils Löcher 16 vorgesehen, deren nicht besonders markierte Mittelpunkte auf der Längsmittellinie L liegen und die übereinstimmende Größe haben, so daß in Richtung der Längsmittellinie L betrachtet die Löcher 16 miteinander fluchten. Die Löcher 16 können kreisrund oder ellipsenförmig sein.

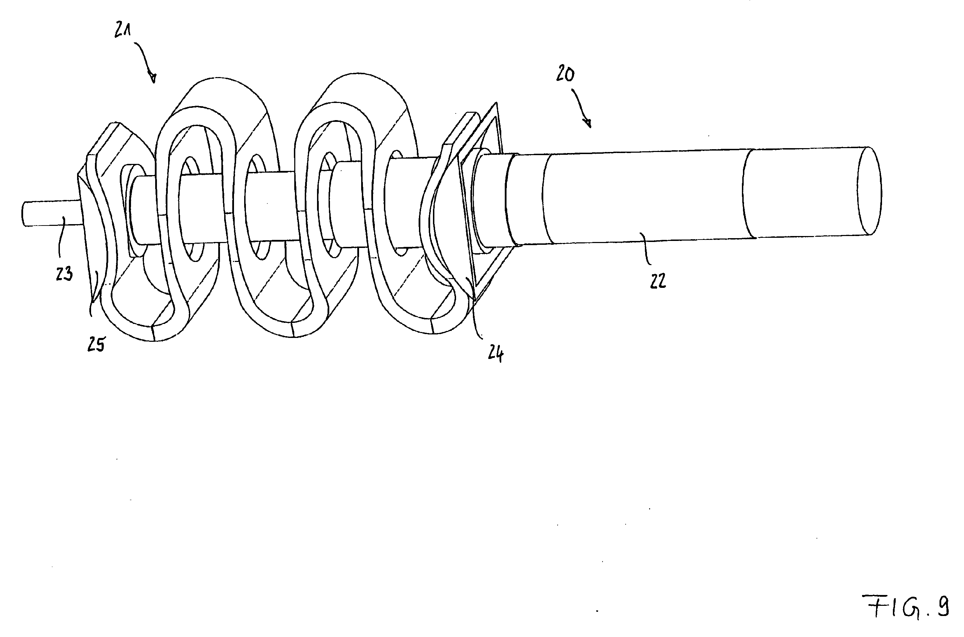

In Figur 9 ist eine erfindungsgemäße Bandfeder 21 nach Figur 8 mit einer Dämpfereinheit 20 zu einem Federbein montiert. Hierbei ist ein äußeres Dämpferrohr 22 mit einem ersten Federteller 24 und ein inneres Dämpferrohr 23 mit einem zweiten Federteller 25 jeweils fest verbunden. Die Dämpfereinheit 20 ist durch die Löcher 16 der Zwischenabschnitte 14, 15 hindurchgesteckt, die oberen und unteren Federteller 24, 25 sind schalenförmige Blechkonstruktionen, die sich flächig an die endständigen Zwischenabschnitte 14, 15 des Wellenzuges der Bandfeder 21 anlegen, wobei diese abgestützten Zwischenabschnitte selber nicht auf Biegung belastet werden. Insoweit ist die Breiten- oder Dickenvariation des Federbandes in diesen Abstützbereichen von geringerer Bedeutung. Allerdings sind die jeweils letzten vollständigen Umkehrbereiche 12, 13 die sich von den Federtellern 24, 25 abheben, bereits erfindungsgemäß mit erhöhtem Biegewiderstandsmoment auszuführen. Die Dämpfereinheit 20 dient erkennbar auch der Führung des Federbandes, d.h. ein seitliches Ausknicken in der Mittelebene des Wellenzuges oder senkrechte Mittelebene des Wellenzuges wird durch die Führung der Löcher 16 auf der Dämpfereinheit 20 verhindert.

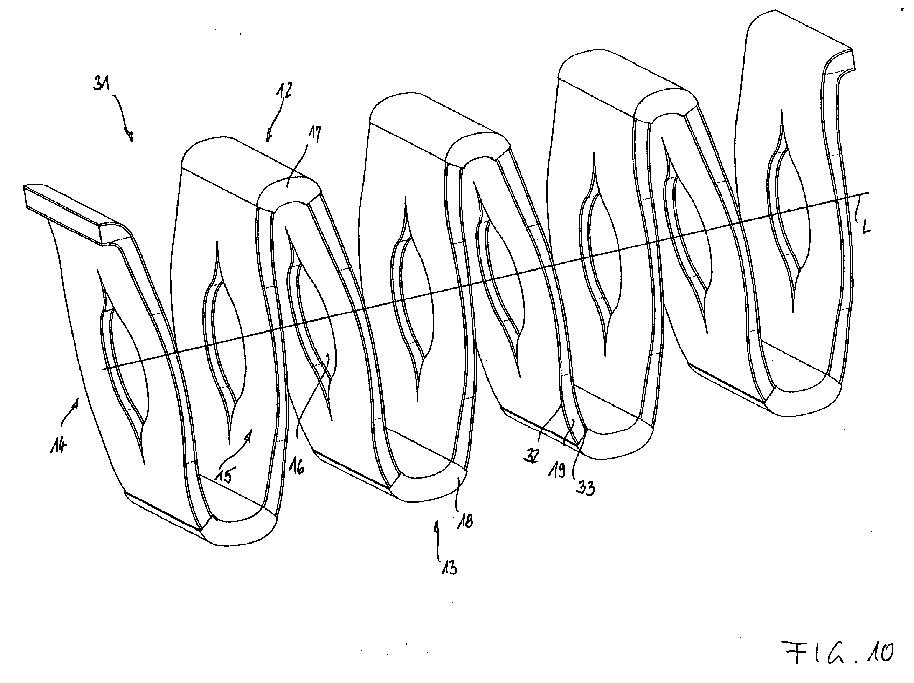

In Figur 10 zeigt eine erfindungsgemäße Bandfeder 31 in einer vierten Ausführungsform die ein Federband mit wellenförmigen Verlauf umfaßt, das insgesamt um eine Längsmittellinie L mäandert und vier vollständige Welleneinheiten hat. Hierbei sind vier vollständige erste Umkehrbereiche 12 sowie drei vollständige und zwei jeweils halb abgeschnittene zweite Umkehrbereiche 13 erkennbar, wobei die hälftigen Umkehrbereiche die Enden der Bandfeder 31 definieren. Die stärker gekrümmten Umkehrbereiche 12, 13 sind durch Zwischenabschnitte 14, 15 mit geringerer Krümmung verbunden. Im vorliegenden Ausführungsbeispiel ist die Materialdicke des Federbandes variabel, wobei die Dicke H der Bandfeder in den Umkehrbereichen 12, 13 wesentlich höher ist, als in den Verbindungsbereichen 14, 15. Die Dickenänderungen sind hierbei weitestgehend stetig. Bei Zug-Druck-Krafteinleitung in die jeweils äußeren Verbindungsbereiche 14, 15 bzw. die hälftig geschnittenen Umkehrbereiche 13 am Ende der Bandfeder kommt es zu einer Verkürzung und Längung der Bandfeder. Die Biegewiderstandsmomente der Umkehrbereiche 12, 13 sind aufgrund der erhöhten Dicke wesentlich höher als die der Zwischenabschnitte 14, 15. Hiermit werden möglichst gleichmäßige Spannungszustände im Material der Bandfeder erreicht. Abweichend von den Bandfedern nach den vorhergehenden Figuren variiert die effektive Breite des Federbandes bei dieser Ausführungsform nur geringfügig. Entsprechend der Ausführungen nach den Figuren 2 und 3 weist die hier gezeigte Bandfeder auch Löcher 16' auf, deren Mittelpunkte, die nicht näher bezeichnet sind, auf der Längsmittellinie L liegen, so daß bei Betrachtung in Richtung der Längsmittellinie L die Löcher miteinander fluchten. Die Löcher 16' sind abweichend von den vorher gezeigten nicht kreisförmig oder ellipsenförmig, sondern linsenförmig, wobei die Längsstreckung in Richtung des Längsverlaufes des Federbandes auftritt. Hierbei ist die Materialbreite der beiden Teile der Zwischenabschnitte 14, 15 im Bereich der Löcher 16' effektiv etwa konstant, wobei Ausbuchtungen der Zwischenabschnitte sich durch die Linsenform der Löcher 16' ergeben.

Die Dickenvariation des Federbandes kann dadurch hergestellt werden, daß in den Umkehrbereichen 12, 13 zusätzliche Prepregs aufgelegt sind, die sich nicht wie die Basis-Prepregs über die gesamte Länge des gewellten Federbandes erstrecken.

Sowohl die ersten Umkehrbereiche 12 als auch die zweiten Umkehrbereiche 13 lassen ergänzend Umwicklungsabschnitte 17, 18 erkennen, die Faserumwicklungen zeigen sollen, die vor oder nach dem Herstellen des Wellenverlaufes als Verstärkungsumwicklungen auf die Umkehrbereiche 12, 13 quer zum Längsverlauf des Federbandes aufgebracht werden. Von den Faserumwicklungen ausgenommen sind ausschließlich die halb abgeschnittenen Umkehrbereiche an den Enden der Bandfeder.

Die Bandfeder 31 läßt als weitere zusätzliche Einzelheit einen geschichteten Aufbau des Federbandes erkennen, der eine Mittelschicht 19 mit variablem Dickenverlauf, beispielsweise hergestellt aus Prepregs, und Außenschichten 32, 33 aus Faserverbundmaterial erhöhter Qualität, beispielsweise hergestellt aus harzgetränkten Fasermatten oder Fasersträngen, insbesondere aus Kohlefaser umfasst.

Der geschichtete Aufbau erstreckt sich, obwohl in den Umwicklungsbereichen 17, 18 nicht erkennbar, über die gesamte Länge des Federbandes.

Aufgrund der größeren Dicke der Umkehrbereiche 12, 13 und/oder aufgrund der zusätzlichen Faserumwicklungen 17, 18 ist das Biegewiderstandsmoment der Umkehrbereiche 12, 13 dieser Bandfeder wiederum größer als das der Zwischenabschnitte 14, 15. Insofern ist auch hier bei Zug-Druck-Belastung der Bandfeder in Richtung der Längsmittelachse L eine Vergleichmäßigung der inneren Spannungszustände sichergestellt.

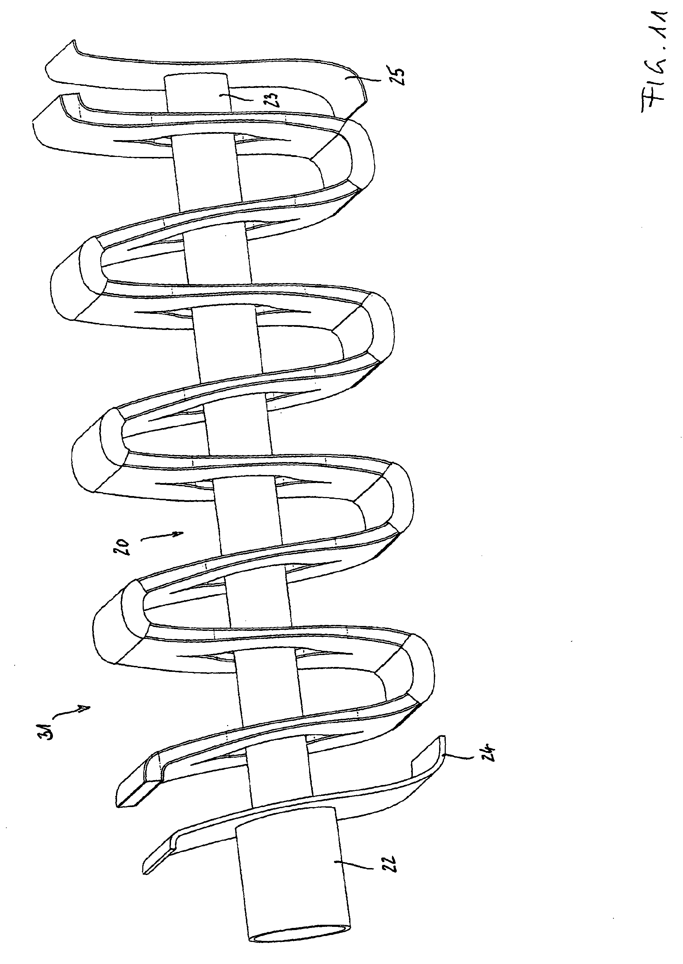

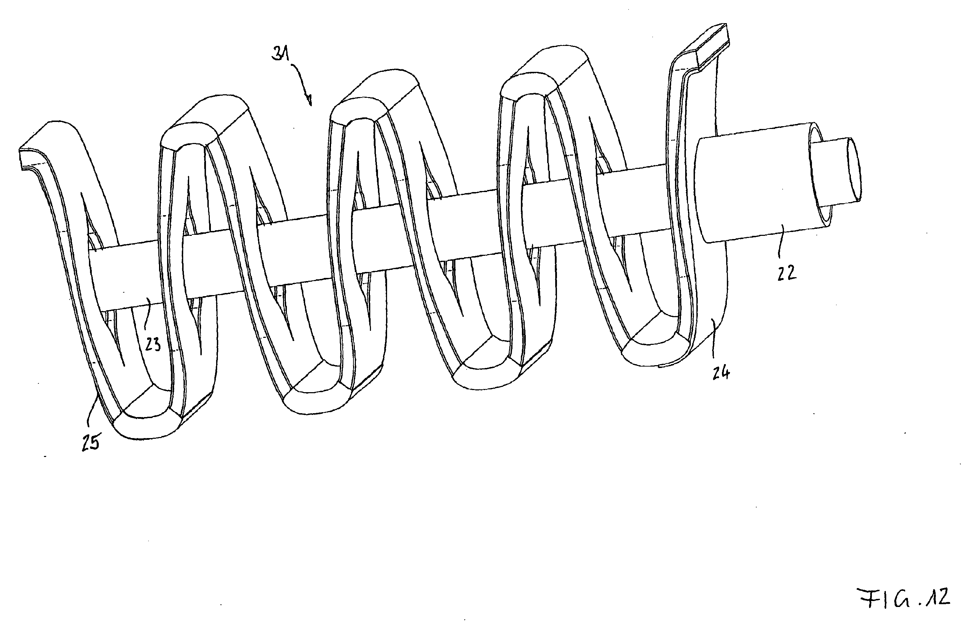

Die Figuren 11 und 12 werden nachfolgend gemeinsam beschrieben. Die Figuren zeigen eine Federbeinkonstruktion mit einer erfindungsgemäßen Bandfeder 31 gemäß Figur 10. In Figur 11 ist eine Explosionsdarstellung in Richtung der Längsmittelachse L gezeigt, während in Figur 12 ein gebrauchsfertiger Zusammenbau erkennbar ist.

In den Figuren 11 und 12 sind Teile einer Dämpfereinheit 20 mit der erfindungsgemäßen Bandfeder 31 nach Figur 10 teilweise montiert bzw. fertig montiert dargestellt. Hierbei ist ein äußeres Dämpferrohr 22 mit einem ersten Federteller 24 und ein inneres Dämpferrohr 23 mit einem zweiten Federteller 25 jeweils fest verbunden. Das innere Dämpferrohr ist durch die Löcher 16' der Zwischenabschnitte 14, 15 hindurchgesteckt, wobei die Einzelheiten der fertigen Dämpfereinheit 20 nicht alle erkennbar sind. Insbesondere kann das äußere Dämpferrohr 22 sehr viel weiter über das innere Dämpferrohr 23 reichen und ebenfalls durch einen Teil der Löcher 16' hindurchgesteckt sein. Die oberen und unteren Federteller 24, 25 sind geschwungene Bandabschnitte aus Blech, die sich flächig an die endständigen Zwischenabschnitte 14, 15 des Wellenzugs der Bandfeder anlegen, so daß erkennbar diese abgestützten Zwischenabschnitte selber nicht auf Biegung belastet werden. Insoweit ist die Breiten- oder Dickenvariation des Federbandes in diesen Bereichen von geringer Bedeutung. Allerdings sind jeweils die letzten vollständigen Umkehrbereiche 12, 13, die sich von den Federtellern 24, 25 abheben, bereits erfindungsgemäß mit erhöhtem Biegewiderstandsmoment auszuführen. Die Dämpfereinheit 20 dient erkennbar auch der Führung des Federbandes, d.h. ein seitliches Ausknicken in der Mittelebene des Wellenzuges oder senkrecht zur Mittelebene des Wellenzuges wird durch die Führung der Löcher 16' auf der Dämpfereinheit 20 verhindert.

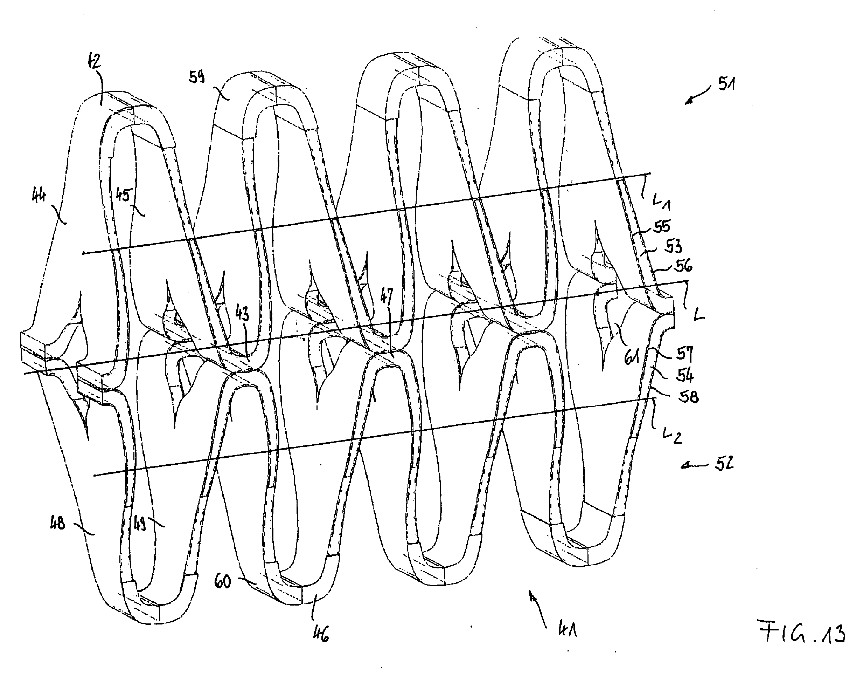

Figur 13 ist eine Bandfeder 41 der zweiten doppelwelligen Art gezeigt, an der zwei Wellenzüge 51, 52 erkennbar sind, wobei der erste Wellenzug 51 um eine erste Mittelachse L1 mäandert und der zweite Wellenzug 52 um eine zweite Mittelachse L2 mäandert, die zueinander parallel sind. Parallel und mittig zwischen den Längsmittellinien L1 und L2 liegt eine Gesamtlängsmittellinie L, die etwa der Richtung der Krafteinleitungslinie K entspricht. Der erste Wellenzug 51 hat äußere Umkehrbereiche 42 und innere Umkehrbereiche 43, die durch Zwischenabschnitte 44, 45 mit geringer Biegung miteinander verbunden sind. Der zweite Wellenzug 52 hat äußere Umkehrbereiche 46 und innere Umkehrbereiche 47, die über Zwischenabschnitte 48, 49 mit geringerer Biegung miteinander verbunden sind. Die Breite B der Wellenzüge verändert sich in geringerem Maße als die Dicke H der Wellenzüge 51, 52, die in den äußeren Umkehrbereichen 42, 46 am größten ist, während eine Dickenerhöhung geringeren Ausmaßes auch in den inneren Umkehrbereichen 43, 47 im Verhältnis zu den Zwischenabschnitten 46, 47, 48, 49 erkennbar ist. Ähnlich wie beim Ausführungsbeispiel nach Figur 5 sind die äußeren Umkehrbereiche 42, 46 mit zusätzlichen Faserumwicklungen 59, 60 verstärkt, die zur zusätzlichen Steigerung des Biegewiderstandsmomentes führen. Ebenfalls in Anlehnung an die Bandfeder nach den Figuren 10 bis 12 ist auch hier ein geschichteter Aufbau der Wellenzüge 51, 52 erkennbar, wobei jeweils eine Mittelschicht 53, 54 die variable Dicke darstellt, während außenliegende Schichten 55, 56, 57, 58 aus höherwertigem Material über der Länge der Bandfeder eine konstante Dicke aufweisen. Auch hier kann das höherwertige Material beispielsweise aus Strängen oder Gewebematten aus Kohlefaser, Aramidfasern oder Metallfasern bestehen, während die innenliegenden Mittelschichten 53, 54 aus Prepregs aus Glasfasermatten aufgebaut sein können.

Wesentlich für das hier dargestellte Ausführungsbeispiel ist es, daß die beiden Wellenzügen 51, 52 an den jeweils innenliegenden Umkehrbereichen 43, 47 miteinander verbunden sind. Auch wenn die grafische Darstellung es so erscheinen läßt, als seien hier zwei unabhängige Wellenzüge zunächst fertiggestellt und anschließend miteinander verbunden, so ist es tatsächlich möglich, daß in den Verbindungsbereichen der Wellenzüge Faserstränge des einen Wellenzuges in dem anderen Wellenzug weiterlaufen und umgekehrt. Die dargestellte doppelwellige Bandfeder ist somit als einheitliches Gebilde zu verstehen.

In Richtung der Längsmittellinie L betrachtet durchsetzen etwa linsenförmige Löcher 61 die inneren Umkehrbereiche symmetrisch. Hierbei sind die Umkehrbereiche so verbreitert, daß ihre effektive Breite der effektiven Breite der äußeren Umkehrbereiche 42, 43 angenähert ist, d.h. also die wirksame Breite unter Vernachlässigung der Durchgangslöcher etwa konstant ist. Die Funktion der Durchgangslöcher 61 läßt sich aus der nachfolgenden Figur erkennen.

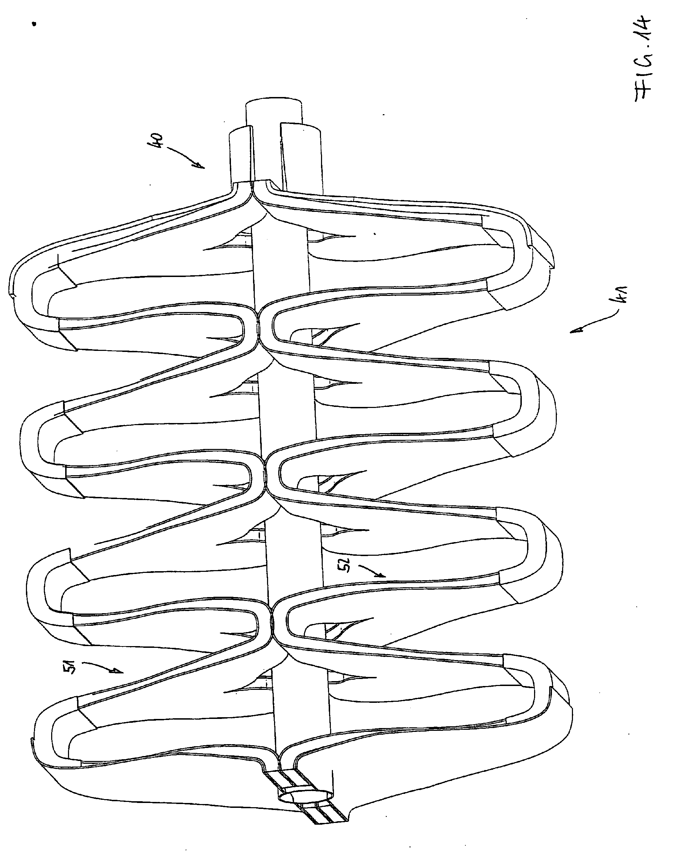

In Figur 14 sind gleiche Einzelheiten wie in Figur 13 mit gleichen Bezugsziffern versehen, wobei nur ein Teil der Bezugsziffern der wesentlichen Merkmale übernommen ist. Auf die vorhergehende Beschreibung wird insoweit Bezug genommen. In die Flucht der Löcher 61 ist eine Dämpfereinheit 40 eingesteckt, wobei ein äußeres Dämpferrohr 62 mit einem unteren Federteller 64 verbunden ist, in das ein inneres Dämpferrohr 63 eingesteckt ist, das mit einem oberen Federteller 65 ausgeführt ist. Die Federteller 64, 65 sind geschwungene Bandkörper aus Blech, die sich an die letzten Verbindungsabschnitte der Wellenzüge 51 und 52 flächig anlegen, so daß in diese Kräfte eingeleitet werden können, ohne daß sie selber auf Biegung beansprucht werden. Biegekräfte wirken auf die ersten sich von den Federtellern 64, 65 abhebenden äußeren Umkehrbereiche 42, 46, sowie den gesamten weiteren Federverlauf ein. Die höher belasteten äußeren Umkehrbereiche 42, 46 haben hierbei ein erhöhtes Biegewiderstandsmoment, so daß die inneren Spannungen im Federmaterial aneinander angeglichen sind, idealerweise überall konstant sind.

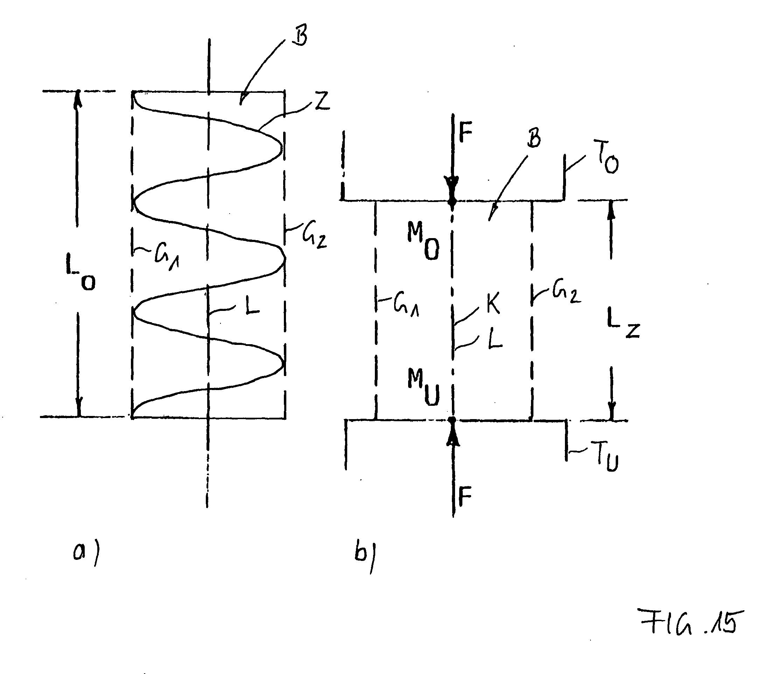

In Figur 15 ist eine erfindungsgemäße Bandfeder B in Seitenansicht in Prinzipdarstellung gezeigt, die eine gerade Längsmittellinie L hat. In Darstellung a) ist der Wellenzug Z zwischen zwei parallelen Begrenzungslinien G₁, G₂ in entspanntem Zustand mit der Länge L0 dargestellt.

In Darstellung b) ist die verkürzte Bandfeder B nur durch die parallelen Begrenzungslinien G₁, G₂ gekennzeichnet, wobei die Bandfeder unter der Einwirkung von entgegengesetzt gerichteten Kräften F zwischen zwei zueinander parallelen Federtellern TO, TU auf die Länge LZ verkürzt ist. Die Kräfte F greifen in Richtung einer Kraftwirkungslinie K an, die sich zwischen einem oberen Windungsmittelpunkt MO und einem unteren Windungsmittelpunkt MU der Bandfeder B erstreckt.

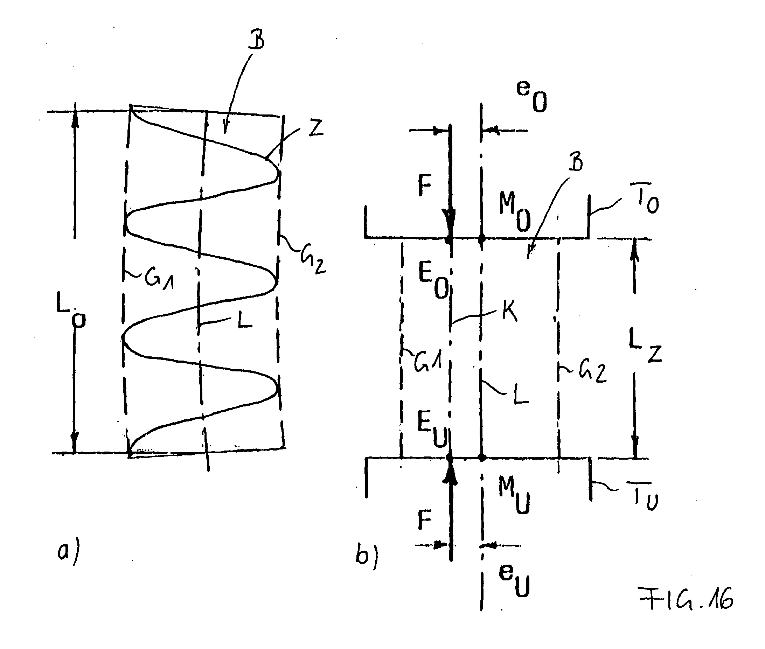

In Figur 16 ist eine erfindungsgemäße Bandfeder B in Seitenansicht in Prinzipdarstellung gezeigt, die eine C-förmig gekrümmte Längsmittellinie L hat. In Darstellung a) ist der Wellenzug Z zwischen zwei C-förmig gekrümmten Begrenzungslinien G₁, G₂ in entspanntem Zustand mit der Länge L0 dargestellt.

In Darstellung b) ist die verkürzte Bandfeder B nur durch die jetzt parallelen geraden Begrenzungslinien G₁, G₂ gekennzeichnet, wobei die Bandfeder unter der Einwirkung von entgegengesetzt gerichteten Kräften F zwischen zwei parallelen Federtellern TO, TU auf die Länge LZ verkürzt ist. Die Kräfte greifen in Richtung einer Kraftwirkungslinie K an, die gegenüber einem oberen Windungsmittelpunkt MO und gegenüber einem unteren Windungsmittelpunkt MU der Bandfeder jeweils einem gleichgerichteten gleichgroßen Seitenversatz eo, eu aufweist, so daß die Kraftwirkungslinie K zur Längsmittellinie L parallel versetzt ist..

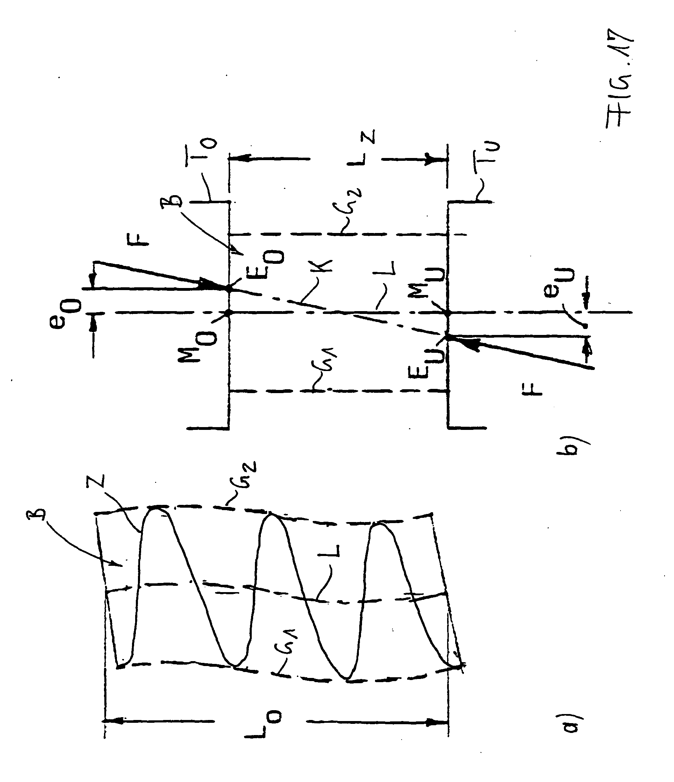

In Figur 17 ist eine erfindungsgemäße Bandfeder B in Seitenansicht in Prinzipdarstellung gezeigt, die eine S-förmig gekrümmte Längsmittellinie L hat. In Darstellung a) ist der Wellenzug Z zwischen zwei S-förmig gekrümmten Begrenzungslinien G₁, G₂ in entspanntem Zustand mit der Länge L0 dargestellt.

In Darstellung b) ist die verkürzte Bandfeder B nur durch die jetzt parallelen geraden Begrenzungslinien G₁, G₂ gekennzeichnet, wobei die Bandfeder unter der Einwirkung von zwei entgegengesetzt gerichteten Kräften F zwischen zwei zueinander parallelen Federtellern TO, TU auf die Länge LZ verkürzt ist. Die Kräfte greifen in Richtung der Kraftwirkungslinie K an, die gegenüber einem oberen Bindungsmittelpunkt MO und einem unteren Bindungsmittelpunkt MU der Bandfeder jeweils einen entgegengesetzt gerichteten gleichgroßen Seitenversatz eo, eu aufweist, so daß die Kraftwirkungslinie K die Längsmittellinie L auf halber Länge schneidet.

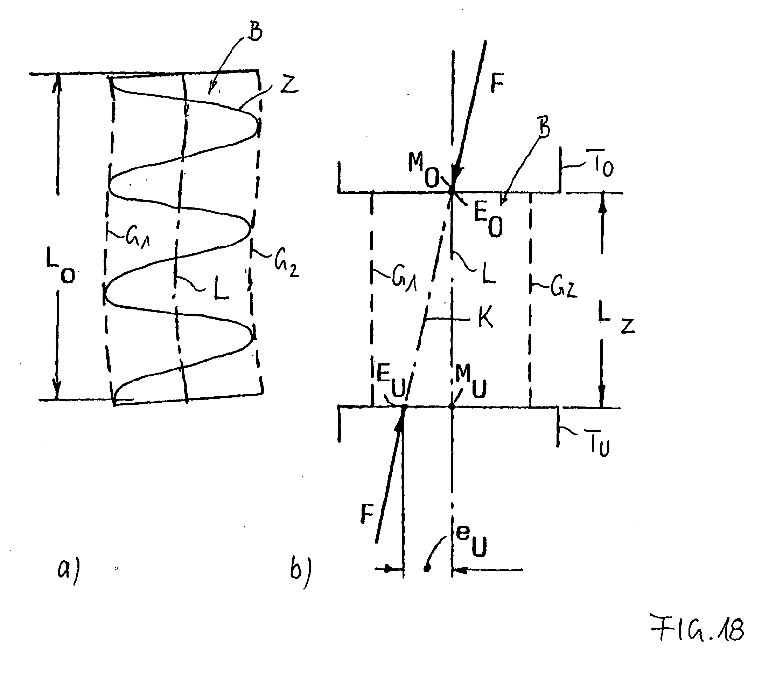

In Figur 18 ist eine erfindungsgemäße Bandfeder B in Seitenansicht in Prinzipdarstellung gezeigt, die eine Längsmittellinie L die aus der Überlagerung einer C-förmig gekrümmten Kurve und einer S-förmig gekrümmten Kurve gebildet ist. In Darstellung a) ist der Wellenzug Z zwischen zwei Begrenzungslinien G₁, G₂ in entspanntem Zustand mit der Länge L0 dargestellt, die in ihrer Krümmung der Längsmittellinie L entsprechen.

In Darstellung b) ist die verkürzte Bandfeder nur durch die jetzt parallelen geraden Begrenzungslinien G₁, G₂ gekennzeichnet, wobei die Bandfeder unter der Einwirkung von zwei entgegengesetzt gerichteten Kräften F zwischen zwei zueinander parallelen Federtellern TO, TU auf die Länge LZ verkürzt ist. Die Kräfte greifen in Richtung der Kraftwirkungslinie K an, die durch einen oberen Windungsmittelpunkt MO verläuft und gegenüber einem unteren Bindungsmittelpunkt MU der Bandfeder ein seitlichen Versatz eu aufweist.

Mit der Abwandlung der Federform können auf diese Weise verschiedene Federcharakteristiken dargestellt werden.

### Bezugszeichenliste

- 11: Bandfeder
- 12: Umkehrbereich
- 13: Umkehrbereich
- 14: Zwischenabschnitt
- 15: Zwischenabschnitt
- 16: Durchgangsloch
- 17: Umwicklungsabschnitt
- 18: Umwicklungsabschnitt
- 19: Mittelschicht
- 20: Dämpfereinheit
- 21: Bandfeder
- 22: Außenrohr
- 23: Innenrohr
- 24: Federteller
- 25: Federteller

- 31: Bandfeder
- 32: Außenschicht
- 33: Außenschicht

- 40: Dämpfereinheit
- 41: Bandfeder
- 42: Umkehrbereich
- 43: Umkehrbereich
- 44: Zwischenabschnitt
- 45: Zwischenabschnitt
- 46: Umkehrbereich
- 47: Umkehrbereich
- 48: Zwischenabschnitt
- 49: Zwischenabschnitt

- 51: Wellenzug
- 52: Wellenzug
- 53: Mittelschicht
- 54: Mittelschicht
- 55: Außenschicht
- 56: Außenschicht
- 57: Außenschicht
- 58: Außenschicht
- 59: Umwicklungsabschnitt
- 60: Umwicklungsabschnitt
- 61: Durchgangsloch
- 62: Dämpferrohr
- 63: Dämpferrohr
- 64: Federteller
- 65: Federteller

## Patentansprüche

1. Bandfeder (11, 21, 31) aus Faserverbundmaterial mit wellenförmigen Verlauf, wobei ein Federband als einzelner Wellenzug aus Umkehrbereichen (12, 13) und Zwischenabschnitten (14, 15) u_m eine Längsmittellinie (L) mäandert, die im wesentlichen der Richtung der Krafteinleitung (K) entspricht,
wobei in den Umkehrbereichen (12, 13) des Wellenzuges jeweils ein erhöhtes Widerstandsmoment des Federbandes vorgesehen ist,
wobei die effektive Querschnittsfläche des Federbandes über der Länge im wesentlichen konstant ist,
wobei die Dicke (H) des Federbandes in den Umkehrbereichen (12, 13) gegenüber der Dicke der verbindenden Zwischenabschnitte (14, 15) erhöht ist und
wobei die Variation der Breite (B) über der Länge des Federbandes stetig erfolgt.

2. Bandfeder (11, 21, 31) nach Anspruch 1,
**dadurch gekennzeichnet,**
**daß** die Breite (B) des Federbandes in den Umkehrbereichen (12, 13) gegenüber der Breite der verbindenden Zwischenabschnitten (14, 15) konstant oder reduziert ist, wobei die Breite (B) des Federbandes quer zum Krümmungsverlauf des Wellenzuges liegt.

3. Bandfeder nach einem der Ansprüche 1 oder 2,
**dadurch gekennzeichnet,**
**daß** die Bandfeder aus glasfaserverstärktem Kunststoff (GFK) und/oder aus kohlefaserverstärktem Kunststoff (CFK) und/ oder aus aramidfaserverstärktem Kunststoff besteht.

4. Bandfeder (11, 21, 31) nach einem der Ansprüche 1 bis 3,
**dadurch gekennzeichnet,**
**daß** die Zwischenabschnitte (14, 15) in der Achse der Längsmittellinie (L) miteinander fluchtende Durchgangslöcher (16) aufweisen.

5. Bandfeder (11, 21, 31) nach einem der Ansprüche 1 bis 4,
**dadurch gekennzeichnet,**
**daß** das Federband unter Verwendung von zugeschnittenen harzimprägnierten Fasermatten (Prepregs) hergestellt ist.

6. Bandfeder (11, 21, 31) nach einem der Ansprüche 1 bis 5,
**dadurch gekennzeichnet,**
**daß** das Federband unter Verwendung von in situ verlegten harzimprägnierten Fasersträngen (Rowings) hergestellt ist.

7. Bandfeder (11, 21, 31) nach einem der Ansprüche 1 bis 6,
**dadurch gekennzeichnet,**
**daß** in den Umkehrbereichen (12, 13) zusätzliche Abschnitte von harzimprägnierten Fasermatten (Prepregs) eingearbeitet sind.

8. Bandfeder (11, 21, 31) nach einem der Ansprüche 1 bis 7,
**dadurch gekennzeichnet,**
**daß** die Umkehrbereiche (12, 13) mit zusätzlichen harzimprägnierten Fasersträngen (Rowings) quer zum Längsverlauf des Federbandes umwickelt sind.

9. Bandfeder (11, 21, 31) nach einem der Ansprüche 1 bis 8,
**dadurch gekennzeichnet,**
**daß** das Federband mehrschichtig aufgebaut ist, wobei zumindest in den Umkehrbereichen (12, 13) zumindest auf der konvexen Außenseite eine zusätzliche Faserverbundmaterialschicht von höherer Qualität eingearbeitet ist.

10. Bandfeder (11, 21, 31) nach einem der Ansprüche 1 bis 9,
**dadurch gekennzeichnet,**
**daß** die Variation der Breite (B) über der Länge des Federbandes durch einen sinusförmigen Verlauf der Längskanten definiert ist.

11. Bandfeder (11, 21, 31) nach einem der Ansprüche 1 bis 10,
**dadurch gekennzeichnet,**
**daß** die Variation der Dicke (H) über der Länge des Federbandes im wesentlichen stetig oder fein gestuft erfolgt.

12. andfeder (11, 21, 31) nach einem der Ansprüche 1 bis 11,
**dadurch gekennzeichnet,**
**daß** das Federband beidendig in einem Umkehrbereich (12, 13) endet.

13. Bandfeder (11, 21, 31) nach einem der Ansprüche 1 bis 12,
**dadurch gekennzeichnet,**
**daß** die Zwischenabschnitte (14, 15) nur geringe Biegung aufweisen, insbesondere eben sind.

14. Bandfeder (11, 21, 31) nach einem der Ansprüche 1 bis 13,
**dadurch gekennzeichnet,**
**daß** die Längsmittellinie (L) C-förmig gekrümmt ist.

15. Bandfeder (11,21,31) nach einem der Ansprüche 1 bis 14,
**dadurch gekennzeichnet,**
**daß** die Längsmittellinie (L) ausschließlich S-förmig symmetrisch gekrümmt ist.

16. Bandfeder (11, 21, 31) nach einem der Ansprüche 1 bis 15,
**dadurch gekennzeichnet,**
**daß** die Längsmittellinie (L) einen gekrümmten Verlauf hat, der sich aus der Überlagerung eine C-förmige Kurve und einer symmetrischen S-förmigen Kurve ergibt.

17. Federbein für ein Kraftfahrzeug mit einer Bandfeder (11, 21, 31) nach einem der Ansprüche 1 bis 16,
**dadurch gekennzeichnet,**
**daß** ein rohrförmiges Dämpferelement (20, 40) durch die Durchgangslöcher (16, 61) der Bandfeder durchgesteckt ist und mit zumindest einem Ende der Bandfeder verbunden ist.

18. Federbein nach Anspruch 17,
**dadurch gekennzeichnet,**
**daß** ein Innenrohr (23, 63) und/ oder ein Außenrohr (22, 62) des Dämpferelements (20, 40) mit einem Federteller (24, 25, 64, 65) verbunden ist, der flächig an einem Endabschnitt der Bandfeder bis zum ersten Umkehrbereich anliegt.

## Claims

1. A band spring (11, 21, 31) consisting of a fibre composite material and extending in an undulating way, wherein a spring band meanders in the form of a single wave train composed of reversal regions (12, 13) and intermediate portions (14, 15) around a longitudinal centre line (L) which, substantially, corresponds to the direction of force introduction (K),
wherein, in the reversal regions (12, 13) of the wave train, there is provided an increased resistance moment of the spring band,
wherein, along the length, the effective cross-sectional area of the spring band is substantially constant,
wherein, in the reversal regions (12, 13), the thickness (H) of the spring band is increased relative to the thickness of the connecting intermediate portions (14, 15), and
wherein, along the length of the spring band, the variation of the width (B) is constantly effected.

2. A band spring (11, 21, 31) according to claim 1,
**characterised in**
**that** the width (B) of the spring band in the reversal regions (12, 13) is constant or reduced relative to the width of the connecting intermediate portions (14, 15), wherein the width (B) of the spring band extends transversely to the curvature of the wave train.

3. A band spring according to any one of claims 1 or 2,
**characterised in**
**that** the band spring consists of glass-fibre-reinforced plastics (GFK) and/or of carbon-fibre-reinforced plastics (CFK) and/or of aramid-fibre-reinforced plastics.

4. A band spring (11, 21, 31) according to any one of claims 1 to 3,
**characterised in**
**that**, in the axis of the longitudinal centre line (L), the intermediate portions (14, 15) comprise through-holes (16) which are aligned relative to one another.

5. A band spring (11, 21, 31) according to any one of claims 1 to 4,
**characterised in**
**that** the spring band is produced by using cut-to-size resin-impregnated fibre mattings (prepregs).

6. A band spring (11, 21, 31) according to any one of claims 1 to 5,
**characterised in**
**that** the spring band is produced by using in-situlaid, resin-impregnated fibre strands (rowings).

7. A band spring (11, 21, 31) according to any one of claims 1 to 6,
**characterised in**
**that** additional portions of resin-impregnated fibre mattings (prepregs) are worked into the reversal regions (12, 13).

8. A band spring (11, 21, 31) according to any one of claims 1 to 7,
**characterised in**
**that** additional resin-impregnated fibre strands (rowings) are wound around the reversal regions (12, 13) transversely to the longitudinal extension of the spring band.

9. A band spring (11, 21, 31) according to any one of claims 1 to 8,
**characterised in**
**that** the spring band is multi-layered, wherein, at least in the reversal regions (12, 13), at least on the convex outside, there is worked in an additional layer of a fibre composite material of a higher-grade quality.

10. A band spring (11, 21, 31) according to any one of claims 1 to 9,
**characterised in**
**that** the variation in the width (B) along the length of the spring band is defined by a sinusoidal shape of the longitudinal edges.

11. A band spring (11, 21, 31) according to any one of claims 1 to 10,
**characterised in**
**that** the variation in the thickness (H) along the length of the spring band is substantially uniform or finely stepped.

12. A band spring (11, 21, 31) according to any one of claims 1 to 11,
**characterised in**
**that**, at both ends, the spring band ends in a reversal region (12, 13).

13. A band spring (11, 21, 31) according to any one of claims 1 to 12,
**characterised in**
**that** the intermediate portions (14, 15) only have a slight bending, more particularly, they are planar.

14. A band spring (11, 21, 31) according to any one of claims 1 to 13,
**characterised in**
**that** the longitudinal centre line (L) is curved so as to be C-shaped.

15. A band spring (11, 21, 31) according to any one of claims 1 to 14,
**characterised in**
**that** the longitudinal centre line (L) is curved symmetrically so as to be entirely S-shaped.

16. A band spring (11, 21, 31) according to any one of claims 1 to 15
**characterised in**
**that** the longitudinal centre line (L) follows a curved course which results from a C-shaped curve and a symmetric S-shaped curve being superimposed on one another.

17. A spring strut for a motor vehicle with a band spring (11, 21, 31) according to any one of claims 1 to 17,
**characterised in**
**that** a pipe-shaped damping element (20, 40) passes through the through-holes (16, 61) of the band spring and is connected to at least one end of the band spring.

18. A spring strut according to claim 17,
**characterised in**
**that** an inner pipe (23, 62) and/or an outer pipe (22, 62) of the damping element (20, 40) are/is connected to a spring plate (24, 25, 64, 65) which rests in a planar way against an end portion of the band spring as far as the first reversal region.

## Revendications

1. Ressort en bande (11, 21, 31) en un matériau composite renforcé de fibres, présentant un tracé de forme ondulée,
dans lequel une bande de ressort, en tant que train d'ondes individuel constitué de zones d'inversion de sens (12, 13) et de tronçons intermédiaires (14, 15), s'étend en méandres autour d'une ligne centrale longitudinale (L), qui correspond sensiblement à la direction d'application des forces (F),
dans lequel dans les zones d'inversion de sens (12, 13) du train d'ondes est prévu respectivement un moment résistant accru de la bande de ressort,
dans lequel la surface de section transversale effective de la bande de ressort est sensiblement constante sur l'étendue en longueur,
dans lequel l'épaisseur (H) de la bande de ressort dans les zones d'inversion de sens (12, 13) est accrue par rapport à l'épaisseur des tronçons intermédiaires (14, 15) qui les relient, et
dans lequel la variation de la largeur (B) sur l'étendue en longueur de la bande de ressort s'effectue en continu.

2. Ressort en bande (11, 21, 31) selon la revendication 1,
**caractérisé en ce que** la largeur (B) de la bande de ressort dans les zones d'inversion de sens (12, 13) est constante ou réduite par rapport à la largeur des tronçons intermédiaires (14, 15) qui les relient, la largeur (B) de la bande de ressort s'étendant transversalement au tracé de courbure du train d'ondes.

3. Ressort en bande selon l'une des revendications 1 ou 2,
**caractérisé en ce que** le ressort en bande est réalisé en matière plastique renforcée de fibres de verre (GFK) et/ou en matière plastique renforcée de fibres de carbone (CFK) et/ou en matière plastique renforcée de fibres d'aramide.

4. Ressort en bande (11, 21, 31) selon l'une des revendications 1 à 3,
**caractérisé en ce que** les tronçons intermédiaires (14, 15) présentent des trous de passage (16) mutuellement alignés les uns avec les autres dans l'axe de la ligne centrale longitudinale (L).

5. Ressort en bande (11, 21, 31) selon l'une des revendications 1 à 4,
**caractérisé en ce que** la bande de ressort est fabriquée en utilisant des nappes de fibres imprégnées de résine et découpées (prepregs = nappes de fibres préimprégnées).

6. Ressort en bande (11, 21, 31) selon l'une des revendications 1 à 5,
**caractérisé en ce que** la bande de ressort est fabriquée en utilisant des faisceaux de fibres tressées imprégnés de résine (rowings) et posés in situ.

7. Ressort en bande (11, 21, 31) selon l'une des revendications 1 à 6,
**caractérisé en ce que** dans les zones d'inversion de sens (12, 13) sont intégrées des tronçons supplémentaires de nappes de fibres imprégnées de résine (prepregs).

8. Ressort en bande (11, 21, 31) selon l'une des revendications 1 à 7,
**caractérisé en ce que** les zones d'inversion de sens (12, 13) sont entourées par enroulement de faisceaux supplémentaires de fibres tressées imprégnés de résine (rowings), transversalement à l'étendue longitudinale de la bande de ressort.

9. Ressort en bande (11, 21, 31) selon l'une des revendications 1 à 8,
**caractérisé en ce que** la bande de ressort est d'une construction à couches multiples, une couche supplémentaire de matériau composite renforcé de fibres de qualité accrue étant intégrée au moins dans les zones d'inversion de sens (12, 13), au moins sur le côté extérieur convexe.

10. Ressort en bande (11, 21, 31) selon l'une des revendications 1 à 9,
**caractérisé en ce que** la variation de la largeur (B) sur l'étendue en longueur de la bande de ressort est définie par un tracé de forme sinusoïdale des bords longitudinaux.

11. Ressort en bande (11, 21, 31) selon l'une des revendications 1 à 10,
**caractérisé en ce que** la variation de l'épaisseur (H) sur l'étendue en longueur de la bande de ressort s'effectue sensiblement de manière continue ou de manière finement étagée.

12. Ressort en bande (11, 21, 31) selon l'une des revendications 1 à 11,
**caractérisé en ce que** la bande de ressort se termine aux deux extrémités dans une zone d'inversion de sens (12, 13).

13. Ressort en bande (11, 21, 31) selon l'une des revendications 1 à 12,
**caractérisé en ce que** les tronçons intermédiaires (14, 15) ne présentent qu'une faible courbure, et sont en particulier plats.

14. Ressort en bande (11, 21, 31) selon l'une des revendications 1 à 13,
**caractérisé en ce que** la ligne centrale longitudinale (L) est courbée en forme de C.

15. Ressort en bande (11, 21, 31) selon l'une des revendications 1 à 14,
**caractérisé en ce que** ligne centrale longitudinale (L) est exclusivement courbée de manière symétrique, en forme de S.

16. Ressort en bande (11, 21, 31) selon l'une des revendications 1 à 15,
**caractérisé en ce que** la ligne centrale longitudinale (L) présente un tracé courbe, qui résulte de la superposition d'une courbe en forme de C et d'une courbe symétrique en forme de S.

17. Jambe de suspension pour un véhicule automobile comprenant un ressort en bande (11, 21, 31) selon l'une des revendications 1 à 16,
**caractérisée en ce qu'**un élément amortisseur (20, 40) est engagé à travers les trous de passage (16, 61) du ressort en bande, et est relié à au moins une extrémité du ressort en bande.

18. Jambe de suspension selon la revendication 17, **caractérisée en ce qu'**un tube intérieur (23, 63) et/ou un tube extérieur (22, 62) de l'élément amortisseur (20, 40) est relié à une coupelle de ressort (24, 25, 64, 65), qui s'appuie par sa surface sur un tronçon d'extrémité du ressort en bande, jusqu'à la première zone d'inversion de sens.
